**Europäisches Patentamt**

**European Patent Office**

**Office européen des brevets**

(11) Veröffentlichungsnummer: **0 139 910**
A2

## (12) EUROPÄISCHE PATENTANMELDUNG

(21) Anmeldenummer: **84109166.3**

(22) Anmeldetag: **02.08.84**

(51) Int. Cl.⁴: **G 01 K 13/02**

(30) Priorität: **10.08.83 DE 3328844**

(43) Veröffentlichungstag der Anmeldung:
**08.05.85 Patentblatt 85/19**

(84) Benannte Vertragsstaaten:
**BE FR GB IT NL**

(71) Anmelder: Rheinische Braunkohlenwerke AG.
Stüttgenweg 2
D-5000 Köln 41(DE)

(72) Erfinder: Velling, Günter, Dr. rer. nat.
Rheinstrasse 236
D-5303 Bornheim/Hersel(DE)

(74) Vertreter: Koepsell, Helmut, Dipl.-Ing.
Mittelstrasse 7
D-5000 Köln 1(DE)

(54) Vorrichtung zur Messung der Temperatur von in einer Rohrleitung strömenden Medien.

(57) Zur Ermittlung der Temperatur von in Rohrleitungen strömenden heißen und abrasiven Medien mit Hilfe eines Thermoelementes wird das Thermoelement an einem ringförmige Körper befestigt, der an einer Verbindungsstelle der Rohrleitung angeordnet ist und von dem Medium durchströmt wird. Der ringförmige Körper ist gegenüber der Rohrleitung isoliert. Er ist als Venturirohr ausgebildet und das Thermoelement ist auf der der Strömung abgewandten Rückseite des trichterförmigen Randes des ringförmigen Körpers befestigt. Die befestigung kann durch Löten erfolgen.

Rheinische Braunkohlenwerke AG.                    Ri/140

Vorrichtung zur Messung der Temperatur von in einer
Rohrleitung strömenden Medien

Die Erfindung betrifft eine Vorrichtung zur Messung der
Temperatur von in einer Rohrleitung strömenden heißen und
abrasiven Medien mittels Thermoelement an einer Verbindungsstelle der Rohrleitung.

Der Transport von abrasiven Medien ist häufig im Zusammenhang mit dem Betrieb von Vergasungsanlagen oder sonstigen
Kohlebehandlungsanlagen erforderlich, welche Stäube, Koks
oder sonstige kohlenstoffhaltige Rückstände erzeugen, die
vom Ort der Erzeugung zu einem anderen Ort transportiert
werden müssen. Zur Durchführung eines solchen Transportes
steht häufig nur die Möglichkeit des Förderns über Rohrleitungen zur Verfügung. Der Transport in Rohrleitungen
wird auch deshalb bevorzugt, weil die Medien aufgrund ihrer
hohen Temperatur nicht in unkontrollierbarer Weise mit dem
Sauerstoff der Luft in Berührung kommen dürfen. Infolgedessen werden die Transportwege üblicherweise so ausgelegt
und durch Kühlungsstufen so geleitet, daß das Medium am
Ende des Transportweges auf die Temperatur abgekühlt ist,
bei er es ohne Schaden weiter behandelt oder mit der
Umgebung in Berührung gebracht werden kann. Die Kühlung des
Mediums entlang der Rohrstrecke erfolgt beispielsweise
durch die Zuführung eines gasförmigen Kühlmittels oder
durch das Verlegen der Rohrstrecke durch ein Flüssigkeitsbad. Dabei ist es erforderlich, die Temperatur des geför-

...

derten Mediums innerhalb der Förderstrecke an bestimmten Stellen zu messen, um auf diese Weise Angaben für die Anwendung des Kühlmediums zu erhalten.

Daneben besitzen Medien der genannten Art auch noch die Eigenschaft, aufgrund ihrer Beschaffenheit auf die Rohrleitungen oder sonstigen Förder- und Absperrorgane, durch die sie hindurchgefördert werden, abrasiv zu wirken; d. h. sie wirken wie Schmirgel und üben auf die Transportwege einen entsprechend hohen Verschleiß aus. Aufgrund dieser abrasiven Eigenschaften sind bisher auch alle Versuche gescheitert, die Temperatur der Medien mit Hilfe von sonst üblichen Thermoelementen zu messen, da die Fühlerspitze von in den Medienstrom hineingebrachten Thermoelementen meist nach kurzer Zeit verschlissen waren und ausgewechselt werden mußten. Auf diese Weise konnte die Messung der Temperatur mit Hilfe von handelsüblichen Thermoelementen wirtschaftlich bisher nicht durchgeführt werden. Die Standzeiten bekannter Thermoelemente lagen in der Größenordnung von ein bis zwei Stunden.

Aus den geschilderten Nachteilen und Betriebsbedingungen ergibt sich die Aufgabe für die Erfindung, die zur Messung der Temperatur von in Rohrleitungen strömenden heißen und abrasiven Medien vorgesehenen Thermoelemente so zu verbessern, daß sie von den Medien nicht angegriffen und verschlissen werden.

Diese Aufgabe wird dadurch gelöst, daß das Thermoelement an einem an der Verbindungsstelle der Rohrleitung angeordneten, ringförmigen Körper befestigt wird, der von dem Medium durchströmt wird und von der Verbindungsstelle durch eine Isolierschicht getrennt ist. Eine derartige Anbringung eines Thermoelementes hat sich als sehr vorteilhaft erwiesen, denn mit der gewählten Anordnung wird die insbesondere gegenüber Verschleiß empfindliche Spitze des Thermoelementes geschont, so daß sie von dem Medium nicht mehr angegriffen und abgetragen werden kann. Die Anbringung der Spitze des Thermoelementes an einem ringförmigen Körper bietet indes keine Schwierigkeit; hierzu eigenen sich beispielsweise bekannte Verfahren des Weich- oder Hartlötens.

Erfindungsgemäß wird der ringförmige Körper so ausgebildet, daß er dem strömenden Medium möglichst wenig Widerstand entgegenstellt, wodurch er selbst weitgehend von der abrasiven Wirkung des Mediums verschont bleibt.

Eine Ausbildung des ringförmigen Körpers mit abgerundeten Einlaufkanten beispielsweise in der Form eines Venturirohres hat sich hier als sehr vorteilhaft erwiesen. Durch das Verlängern der Kanten wird darüberhinaus genügend Platz geschaffen zur Anbringung des Thermoelementes auf der der Strömung des Mediums nicht ausgesetzten rückwärtige Seite der verlängerten Kante des ringförmigen Körpers.

Vorteilhafterweise wird der ringförmige Körper aus einem hochtemperatur- und -verschleißfesten Werkstoff hergestellt, der von den abrasive Eigenschaften des strömenden Mediums nahezu unbeeinflußt bleibt und mitunter Standzeiten erreichen kann, die noch höher liegen als die Standzeiten der dem Transport des Mediums dienenden Rohrleitungen.

Der ringförmige Körper nimmt die Temperatur des strömenden Mediums unmittelbar an und gibt sie verlustfrei an das auf seiner Rückseite befestigte Thermoelement weiter. Zur Verbesserung dieser an sich vorteilhaften Kombination hat es sich von weiterem Vorteil erwiesen, den ringförmigen Körper im Zuge der Rohrleitung so einzubauen, daß er gegenüber der Rohrleitung weitgehend isoliert ist. Hierfür

...

eignet sich beispielsweise der Einbau an Verbindungsstellen der Rohrleitung, die im allgemeinen mit Flanschen versehen sind, wo ein derartiger ringförmiger Körper ohne großen Aufwand und ohne Schwierigkeiten zwischen Dichtungsringen so eingebaut werden kann, daß er mit den Rohrleitungen bzw. mit deren Flanschen selbst gar keine Berührung hat. Das Herausführen der Anschlüsse des Thermoelementes bietet in diesem Zusammenhang auch keine Schwierigkeiten und der für die Aufnahme des ringförmigen Körpers benötigte Platz am Verbindungsflansch der Rohrleitung kann durch einfache Distanzstücke überbrückt werden. Somit gestaltet sich die Anbringung einer Meßstelle zur Ermittlung der Temperatur eines in einer Rohrleitung strömenden heißen und abrasiven Mediums nach den Vorschlägen der Erfindung als sehr einfach und wirksam. Das Thermoelement ist fortan keinerlei Verschleiß mehr ausgesetzt und die Übertragung der Temperatur des Mediums auf das Thermoelement erfolgt völlig verlustfrei. Nachfolgend wird die Erfindung anhand eines Ausführungsbeispiels näher erläutert.

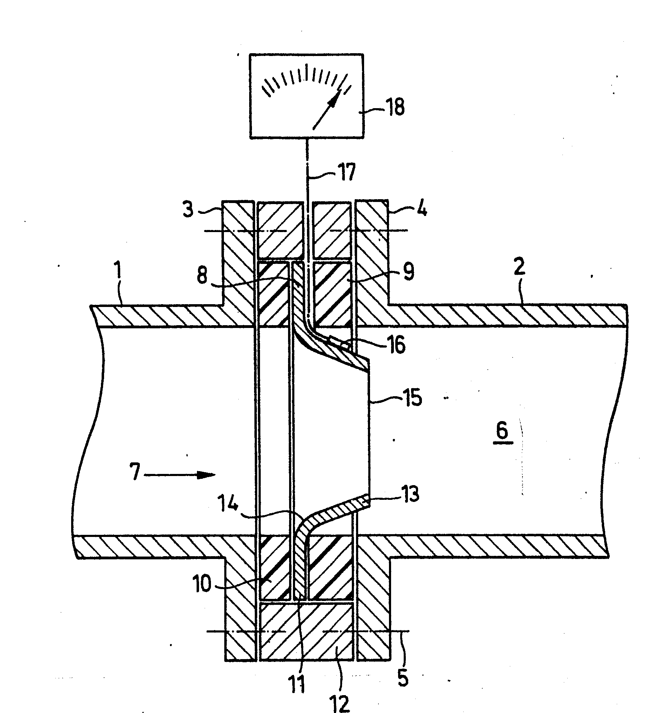

Die einzige Figur zeigt den Ausschnitt aus einer Rohrleitung im Schnitt.

Die Rohrleitung besteht aus den beiden Rohren 1 und 2, welche über ihre zugehörigen Flansche 3 und 4 mit Hilfe von Schraubverbindungen 5 in üblicher Weise miteinander befestigt sind. Der freie Querschnitt 6 der Rohrleitung wird in Richtung des Pfeiles 7 von einem heißen, abrasiven Medium durchströmt. Bei diesem Medium handelt es sich beispielsweise um den Restkoks und Staub die bei der Vergasung von Kohle, insbesondere Braunkohle in einem Reaktor zur hydrierenden Vergasung - HKV - anfallen und von diesem Reaktor (nicht gezeigt) an einen anderen Ort transportiert werden müssen. Der Transport erfolgt pneumatisch in der Atmosphäre eines beispielsweise inerten Gases. Die

...

Temperaturen des Mediums beim Eintritt in die für den Transport vorgesehene Rohrleitung betragen beispielsweise zwischen 800 und 1000° C. Am Ende des Transportweges des Mediums durch die Rohrleitung soll die Temperatur des Mediums nur noch annähernd 300° C betragen.

Zur Messung der Temperatur des strömenden Mediums ist vorgesehen, in die Flanschverbindung 3, 4 und 5 einen ringförmigen Körper 8 einzufügen. Die Anbringung erfolgt unter Zuhilfenahme von Isolierstücken 9 und 10, welche zu beiden Seiten des Flansches 11 des ringförmigen Körpers 8 zwischen die Flansche 3 und 4 der Rohre 1 und 2 eingebracht werden. Der auf diese Weise zwischen den Flanschen 3 und 4 entstehende axiale Abstand wird mit Hilfe von Distanzstücken 12 überbrückt, die auch gleichzeitig der Führung der Schraubverbindung 5 dienen können. Neben dem flanschartigen Klemmteil 11 besitzt der Ring 8 auch noch einen inneren Ringteil 13, der entgegen der Strömungsrichtung 7 mit abgerundeten Einlaufkanten 14 versehen ist und über eine axiale Breite mit der als engste Stelle ausgebildeten rückwärtigen Auslaufkante 15 endet.

Der ringförmige Körper 8 besteht aus einem hochwarm- und -verschleißfesten Material. Dabei kann es sich um eine Hochtemperaturlegierung aus einem austenitischen Werkstoff mit beispielsweise folgender Zusammensetzung handeln:

| | | |
|---|---|---|
| Ni | 30 - 35 | % |
| Cr | 19 - 23 | % |
| C | 0,1 | % |
| Mn | 1,5 | % |
| Cu | 0,75 | % |
| Si | 1 | % |
| Al | 0,5 - 0,6 | % |

Ti     0,15 - 0,6 %

Fe und S.

Der Körper kann auch aus Hartmetall bestehen. Er wird von dem durch den lichten Querschnitt 6 strömenden abrasiven Medium nicht angegriffen. Er hat zweckmäßigerweise die Querschnittsform eines Venturikörpers, wodurch gewährleistet ist, daß er dem strömenden Medium nur einen geringe Widerstand entgegensetzt. Dieser geringe Widerstand reicht bereits aus, um den ringförmigen Körper 8 mit seinem trichterförmigen Teil 13 it dem strömenden Medium in innige Berührung zu bringen, wodurch er die Temperatur des Mediums annimmt. Auf der Rückseite des trichterförmigen Teiles 13 des ringförmigen Körpers 8 ist das Thermoelement 16 befestigt. Entsprechend den jeweils herrschenden Temperaturen kann diese Befestigung durch Weichlot oder Hartlot erfolgen. Auf jeden Fall aber ist die Befestigung so gewählt, daß zwischen dem Thermoelement 16 und dem ringförmigen Körper 8 eine ganz innige Verbindung besteht, die gewährleistet, daß die jeweilige Temperatur des ringförmigen Körpers 8 auf das Thermoelement 16 verlustfrei übertragen wird.

Die Anschlüsse 17 für das Thermoelement sind auf einfache Weise durch die Isolierscheiben 9 oder 19 und ggf. durch das Distanzstück 12 hindurchgeführt und mit einem Meßgerät 18 verbunden, wo die Anzeige der gemessenen Temperatur erfolgt. Die Temperatur entspricht dem jeweils durch den Querschnitt 6 in Richtung des Pfeiles 7 den ringförmigen Körper 8 durchströmenden Medium. Durch die Zwischenschaltung des Ringes 8 tritt das Medium mit dem Thermoelement 16 selbst nicht mehr in direkte Berührung, wodurch das Thermoelement geschont wird und eine praktisch unbegrenzte Standzeit erreicht.

Patentansprüche
=================================

1. Vorrichtung zur Messung der Temperatur von in einer Rohrleitung strömenden heißen und abrasiven Medien mittels Thermoelement an einer Verbindungsstelle der Rohrleitung, dadurch gekennzeichnet, daß das Thermoelement (16) an einem an der Verbindungsstelle (3, 4, 5) angeordneten ringförmigen Körper (8) befestigt ist, der von dem Medium durchströmt wird und von der Verbindungsstelle (3, 4) durch eine Isolierschicht (9, 10) getrennt ist.

2. Vorrichtung nach Anspruch 1, dadurch gekennzeichnet, daß der ringförmige Körper (8) in Richtung (7) der Anströmung durch das Medium abgerundete Kanten (14) hat und über seine axiale Breite in den freien Strömungsquerschnitt (6) des Rohes (1, 2) hineinragt.

3. Vorrichtung nach Ansprüchen 1 und 2, dadurch gekennzeichnet, daß das Thermoelement (16) in der Nähe des engsten Querschnitts (15) des ringförmigen Körpers (8) befestigt ist.

4. Vorrichtung nach Ansprüchen 1 bis 3, dadurch gekennzeichnet, daß das Thermoelement (16) auf der Rückseite der den engsten Querschnitt (15) bildenden Wandung (13) des ringförmige Körpers (8) befestigt ist.

5. Vorrichtung nach Ansprüchen 1 bis 4, dadurch gekennzeichnet, daß der ringförmige Körper (8) als Venturirohr ausgebildet ist.

6. Vorrichtung nach Ansprüchen 1 bis 4, dadurch gekennzeichnet, daß der ringförmige Körper aus einem temperatur- und verschleißfesten Werkstoff oder Hartmetall besteht.